# EUROPEAN PATENT APPLICATION

(11) **EP 4 847 448 A1**
(43) Date of publication of application: **02.12.2026**
(21) Application number: 24932206.6
(22) Date of filing: 12.11.2024
(51) Int. Cl.: C01B 32/312, C01B 32/354, H01M 4/587, H01M 10/054, H01M 4/04

(54) **CARBON MATERIAL, PREPARATION METHOD THEREFOR AND USE THEREOF, AND SODIUM ION BATTERY**

(30) Priority: 29.03.2024 CN 202410371335
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: CAI, Haile, Dalian, Liaoning 116045 (CN); HOU, Shuandi, Dalian, Liaoning 116045 (CN); ZHANG, Shudong, Dalian, Liaoning 116045 (CN); SONG, Yongyi, Dalian, Liaoning 116045 (CN); QU, Jingwen, Dalian, Liaoning 116045 (CN); YAN, Dong, Dalian, Liaoning 116045 (CN); MA, Rui, Dalian, Liaoning 116045 (CN); ZHAO, Liping, Dalian, Liaoning 116045 (CN)
(74) Representative: karo IP
(86) International application number: PCT/CN2024/131517
(87) International publication number: WO 2025/200478

(57) **Abstract**

The present invention relates to the technical field of batteries. Disclosed are a carbon material, a preparation method therefor and the use thereof, and a sodium ion battery. The R₁ value of the carbon material provided by the present invention is 0.19-0.3, preferably 0.22-0.25, I₀₀₂ is the peak intensity of the (002) peak in the XRD pattern of the carbon material, I_{002,G} is the peak intensity of the (002) peak of internal standard graphite in the XRD pattern, and the weight ratio of the carbon material to the graphite during test is 1:10. The carbon material provided by the present invention has a remarkably improved proportion of slope capacity, and slope sections have fast ion transport kinetics and high potential, thus facilitating improvement of rate capacity and cycle performance.

## Description

### CROSS-REFERENCE TO RELATED APPLICATIONS

The application claims the benefit of Chinese patent application No. "202410371335.8", filed on March 29, 2024, the content of which is specifically and entirely incorporated herein by reference.

### TECHNICAL FIELD

The present invention relates to a carbon material, a preparation method therefor and the use thereof, and a sodium ion battery using the carbon material.

### BACKGROUND ART

The proportion of renewable clean energy in the energy sector will continue to increase in the future, but the renewable energy belongs to the intermittent energy, in order to alleviate the fluctuations in the renewable energy power generation, it is urgent to develop the new energy storage technologies. Electrochemical energy storage has the advantages such as high energy density and power density, small geographical restrictions, short construction period and continuously decreasing costs, it is regarded as one of the most promising energy storage technologies. Sodium-ion battery is an energy storage technology with great application prospects, the battery has obvious advantages in safety, high-temperature and low-temperature performance and other aspects; in addition, sodium reserve volume is abundant and not restrained by resources. However, due to the large atomic weight of sodium and the fact that the operating voltage of sodium-ion batteries is 0.3V lower than that of lithium-ion batteries, the energy density of the sodium-ion batteries is slightly lower than that of lithium-ion batteries. Therefore, it is urgent to develop the high-performance key materials for sodium-ion batteries from the bottom layer to promote the industrial development.

In terms of the negative electrode material as one of the key materials of the sodium-ion batteries, the carbon-based materials have emerged as a research hotspot due to their advantages such as low cost, high structural stability, and excellent conductivity. However, for the thermodynamic reasons, sodium ions can hardly perform de-intercalation from the graphite material having a regular and uniform structure, Therefore, graphite negative electrode materials, which have been successfully used in the lithium-ion batteries, are not suitable for the sodium-ion batteries. In contrast, the carbon materials with disordered structures exhibit desirable sodium storage properties.

CN202210076856.1discloses a high-energy-density sodium ion battery, wherein an active material of the negative electrode is a hard carbon material with rich nano-pore channels and a main body pore size of less than 0.4 nm. However, the maximum initial coulombic efficiency of the method is only 81%, and the rate capacity performance is relatively poor. CN201610402215.5 discloses a sodium-ion battery carbon negative electrode material and a preparation method thereof, wherein the raw materials of disordered low-graphitizing carbon materials coat or clad porous oxidized graphene or porous graphene through a hydrothermal method to obtain a carbon material precursor, the carbon material precursor is subjected to further carbonization and activation to form the sodium-ion battery carbon negative electrode material. However, the method requires the use of expensive graphene raw materials.

### SUMMARY OF THE INVENTION

In order to overcome the defects in the prior art, the core purpose of the present invention is to provide a carbon material, a preparation method therefor and the use thereof, wherein the carbon material has a high reversible specific capacity, a high initial coulombic efficiency, a high proportion of slope capacity, and good rate capacity performance, it is suitable as a negative electrode material for the sodium ion batteries.

The first aspect of the present invention provides a carbon material, wherein the carbon material has a R₁ value within the range of 0.19-0.3, preferably within the range of 0.22-0.25; ${R}_{1} = \frac{{I}_{002}}{{I}_{002 , G}}$ , wherein I₀₀₂ is the peak intensity of the (002) peak in the XRD pattern of the carbon material, I_{002,G} is the peak intensity of the (002) peak of internal standard graphite in the XRD pattern, and the weight ratio of the carbon material to the graphite during test is 1: 10. The graphite meets the indicator requirements of natural graphite (Grade I) according to the National Standard GB/T 24533-2019 of China.

The second aspect of the present invention provides a method for preparing the carbon material, the method comprises: contacting a carbon precursor with an activator for activation, then regulating and controlling the content of said activator in an activated product to lower than 0.5wt%, subsequently performing a heat treatment; wherein the heat treatment is performed under a carbon-containing atmosphere condition, and the carbon precursor is non-biomass carbon.

The third aspect of the present invention provides a carbon material prepared with the aforementioned method.

The fourth aspect of the present invention provides a use of the aforementioned carbon material and/or the carbon material prepared with the aforementioned method in negative electrode sheet; preferably the use as a negative electrode sheet in the sodium ion battery.

The fifth aspect of the present invention provides a sodium ion battery, the sodium ion battery comprises the aforementioned carbon material and/or the carbon material prepared with the aforementioned method.

The present inventors have found when the carbon material provided by the present invention has a R₁ value within the range of 0.19-0.3, the carbon material has the characteristics of a high reversible specific capacity, a high initial coulombic efficiency, a high proportion of slope capacity, and good rate capacity performance, thus the invention can be used in the high-power and high-safety sodium-ion batteries. In a case of preferably, the carbon material provided by the invention has a high R₂ value, which can further improve the initial coulombic efficiency (ICE), which can reach 84% or more.

The present invention can obtain a carbon material with an R₁ value within the range of 0.19-0.3 by activating a non-biomass carbon precursor and then performing the heat treatment in a carbon-containing atmosphere. The carbon material has the characteristics of a high reversible specific capacity, a high initial coulombic efficiency, a high proportion of slope capacity, and good rate capacity performance.

The preparation method of the carbon material provided by the present invention has a simple process flow and mild reaction conditions during the preparation process. The reaction temperature is 300-700°C lower than the method of directly carbonizing to prepare the sodium-ion battery negative electrode material, the energy consumption is greatly decreased, thereby reducing the costs of electrode materials and batteries.

### BRIEF DESCRIPTION OF THE DRAWINGS

FIG. 1 illustrates an X-Ray Diffraction (XRD) pattern of the carbon material obtained in Example 4 of the present invention.
FIG. 2 illustrates a Raman spectrogram of the carbon material obtained in Example 4 of the present invention.
FIG. 3 shows a small-angle scattering diffraction pattern of the carbon material obtained in Example 4 of the present invention.
FIG. 4 illustrates a constant current charge-discharge curve of the carbon material obtained in Example 4 of the present invention in the first charge-discharge cycle.
FIG. 5 is a graph showing the rate capacity performance of the carbon material obtained in Example 4 of the present invention.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a carbon material, wherein the carbon material has a R₁ value within the range of 0.19-0.3, preferably within the range of 0.22-0.25, preferably within the range of 0.24-0.25; ${R}_{1} = \frac{{I}_{002}}{{I}_{002 , G}}$, wherein I₀₀₂ is the peak intensity of the (002) peak in the XRD pattern of the carbon material, I_{002,G} is the peak intensity of the (002) peak of internal standard graphite in the XRD pattern, and the weight ratio of the carbon material to the graphite during test is 1:10. The graphite meets the indicator requirements of natural graphite (Grade I) according to the National Standard GB/T 24533-2019 of China.

In the invention, the main component of the carbon material is carbon (C), and at least 95 wt% is carbon element.

Further preferably, the carbon material has a R₂ value within the range of 0.85-1, preferably within the range of 0.94-1, more preferably within the range of 0.96-1; wherein V_{TD} is the internal pore volume of said carbon material measured based on the true density, V_{TD}=1/ρ_{TD}-1/2.26, wherein ρ_{TD} is the true density of said carbon material, V_{SAXS} is the pore volume of said carbon material measured according to the small-angle X-ray scattering results. The unit of V_{TD} is cm³/g, the unit of ρ_{TD} is g/cm³, and the unit of V_{SAXS} is cm³/g. By controlling the R₂ value of the carbon material within the above range, the initial coulombic efficiency (ICE) can be further improved.

In the invention, the test method of true density (ρ_{TD}) is as follows: the Beishide BSD-TD-K fully automatic true density and porosity analyzer is used for measurement, a certain amount of sample is weighed, the sample is placed in the true density tester, helium gas is used as the medium, the measuring chamber is gradually pressurized to a fixed value, and then the helium gas expands into the expansion chamber. The equilibrium pressure of the two processes is automatically recorded by the instrument. According to the law of conservation of mass, the volume of the measuring chamber and the expansion chamber is calibrated by a standard ball, and the volume of said sample is then determined to calculate the true density.

In the present invention, the test method of V_{SAXS} is as follows: Small-angle X-ray scattering (SAXS) testing is performed by using a Malvern Panalytical X'Pert³ MRD high-resolution X-ray diffractometer, with a 30W (wavelength of 0.1542 nm) Cu X-ray source, and an X-ray spot size of 0.8mm×0.8mm. The sample-to-detector distance is 0.55m, the exposure time is 1800s, and the corresponding scattering vector Q value is 0.01-1.1Å⁻¹.

Further preferably, the tap density of the carbon material is within the range of 0.6-1.0 g/cm³, preferably within the range of 0.7-1.0 g/cm³, and more preferably within the range of 0.7-0.8 g/cm³. The tap density is measured by using the BT-312 tap density meter manufactured by Dandong Bettersize Instruments Ltd. A certain mass m of carbon material is weighed and placed in a graduated cylinder. The cylinder is vibrated at a frequency of 300 vibrations/min until the volume of the sample no longer decreases, the volume V is then read, the tap density ρ (g/cm³) = m/V.

Further preferably, the carbon material has a d₀₀₂ value within the range of 0.37-0.4nm, preferably within the range of 0.38-0.4nm; wherein d₀₀₂ is the (002) interplanar crystal spacing. d₀₀₂=λ/(2sinθ), where λ is the wavelength of the incident X-ray, and θ represents the diffraction angle of the (002) crystal plane. The carbon material of the invention has a higher (002) interplanar crystal spacing, which can further improve the performance of the carbon material as a negative electrode material.

Further preferably, the carbon material has an Lc value within the range of 1-3nm, preferably within the range of 1-2nm; more preferably within the range of 1.1-1.6nm, further preferably within the range of 1.1-1.3nm; wherein Lc represents an average grain size of the (002) crystal plane. It is calculated by the Scherrer equation: Lc = λ/βcosθ, where λ is the wavelength of the incident wave, β represents the half-peak width, and θ is the diffraction angle of the (002) crystal plane. The carbon material of the invention has a lower average grain size of the (002) crystal plane, which can further improve the reversible specific capacity, proportion of slope capacity, and initial coulombic efficiency of the carbon material.

In the invention, the d₀₀₂ value and the Lc value are calculated based on the XRD test. The XRD test is performed by using the D/max-2500 type X-ray diffractometer manufactured by Rigaku Company in Japan, with Cu Kα, Ni filter, tube voltage of 20-60kV, tube current of 10-300mA, scan rate of 12.5 (°)/min, and scan rangel of 10°-70°.

Further preferably, the carbon material has a La value within the range of 1-4nm, preferably within the range of 1.5-3nm, more preferably within the range of 1.8-1.9nm; wherein La represents an average grain size of the (100) crystal plane. The La value is calculated by the following formula: $La = \left(2.4\times {10}^{- 10}\right) {λ}^{4} \left(\frac{{I}_{G}}{{I}_{D}}\right)$, wherein λ is the Raman spectrum wavelength, in nm, I_{G} is the peak area of the G peak of the carbon material at vicinity of 1580 cm⁻¹ in the Raman spectrum, and I_{D} is the peak area of the D peak of the carbon material at vicinity of 1350 cm⁻¹ in the Raman spectrum. The carbon material of the present invention has a lower average grain size of the (100) crystal plane, which can further improve the reversible specific capacity, proportion of slope capacity and initial coulombic efficiency of the carbon material. Unless otherwise specified in the present invention, vicinity refers to an acceptable error caused by factors such as instrument/operation in the present invention, for example, ±5 cm⁻¹.

In the present invention, the La value is calculated based on the measurement through the Raman spectrometer. The Raman spectrum is tested on the HR800 confocal microscopic laser Raman spectrometer produced by HORIBA JobinYvon Company in France, with an emission laser wavelength of 532nm, a power of 10mW, a spectral resolution of 0.65 cm⁻¹, a grating of 1,800 g/mm, and a Raman shift range of 0-2000 cm⁻¹.

More preferably, the physisorption specific surface area S_{BET} of the carbon material is not more than 30m²/g, preferably not more than 10m²/g, more preferably within the range of 0.1-9 m²/g, further preferably within the range of 4-6 m²/g, wherein S_{BET} is the specific surface area of the carbon material measured by the N₂ physical adsorption. The carbon material of the invention has a low S_{BET}, which is beneficial for further improving the initial coulombic efficiency.

Further preferably, the specific surface area Sₓ of the carbon material measured by small-angle X-ray scattering is within the range of 500-3,000 m²/g, preferably within the range of 1,000-2,000 m²/g, more preferably within the range of 1,400-2,000 m²/g. The carbon material of the present invention has a high Sₓ, which is beneficial for further improving the reversible specific capacity. Small-angle X-ray scattering (SAXS) testing is performed by using a Malvern Panalytical X'Pert³ MRD high-resolution X-ray diffractometer, with a 30W (wavelength of 0.1542 nm) Cu X-ray source, and an X-ray spot size of 0.8mm×0.8mm. The sample-to-detector distance is 0.55m, the exposure time is 1,800s, and the corresponding scattering vector Q value is within the range of 0.01-1.1Å⁻¹.

Further preferably, the carbon material has a particle diameter D₅₀ within the range of 2-20µm, preferably within the range of 3-10µm.

Further preferably, under a current density of 50mA/g, the proportion of slope capacity of the carbon material specific capacity is within the range of 30-70%, preferably within the range of 35-55%. The proportion of slope capacity refers to the ratio of the specific capacity corresponding to the discharge voltage greater than 0.1 V during the first discharge to the initial discharge specific capacity.

The second aspect of the present invention provides a method for preparing the carbon material, the method comprises: contacting a carbon precursor with an activator for activation, then regulating and controlling the content of said activator in an activated product to lower than 0.5wt%, subsequently performing a heat treatment; wherein the heat treatment is performed under a carbon-containing atmosphere condition, and the carbon precursor is non-biomass carbon.

The carbon material of the invention has good rate capacity, which is related to the high proportion of slope capacity shown on the constant current charge-discharge curve. The reason may be that the precursor in use is non-biomass carbon (e.g., petroleum coke) with soft carbon properties. After appropriate activation treatment, the precursor still retains a regular graphite-like microcrystalline structure, which increases the proportion of slope capacity of the carbon material, such that the material has a high rate capacity characteristic.

According to the present invention, the heat treatment is performed under a carbon-containing atmosphere condition, it is conducive to the formation of closed pores in the carbon material. Preferably, the carbon-containing atmosphere comprises a carbon-containing gas and an optional inactive gas. More preferably, the volume concentration of the carbon-containing gas in the carbon-containing atmosphere is within the range of 1-100%, preferably within the range of 5-50%, such as 15-20%. Further preferably, the carbon-containing gas comprises a hydrocarbon that is in a gaseous state under the heat treatment temperature; more preferably, C1-C10 hydrocarbon (e.g., alkanes, alkenes, alkynes, aromatic hydrocarbons). The carbon-containing gas may be one or more selected from the group consisting of methane, natural gas, ethane, ethylene, acetylene, propane, benzene vapor, toluene vapor, and naphthalene vapor, preferably methane. The inactive gas may be at least one of nitrogen gas and an inert gas, preferably nitrogen gas. The inert gas can be one or more selected from the group consisting of helium, neon, argon, krypton and xenon.

When the heat treatment temperature is reached, the reaction system is preferably subjected to the vacuum treatment. When the vacuum degree drops below 10⁻² kPa, the carbon-containing gas is then introduced. The preferred vacuum treatment can remove pre-adsorbed gas in the material, create a negative pressure that facilitates the diffusion reaction of the carbon-containing gas, and is more conducive to formation of closed pores, resulting in a better closed pore effect.

It has been further discovered that the activation and heat treatment using the method of the invention is also beneficial for increasing the (002) interplanar crystal spacing of the carbon material, and reducing the average grain size of the (002) crystal plane and the average grain size of the (100) crystal plane.

According to a preferred embodiment of the present invention, the heat treatment temperature is within the range of 800-1,300°C, more preferably within the range of 850-1,200°C, further preferably within the range of 900-950°C, and the time is within the range of 0.1-10h, more preferably within the range of 1-6h, further preferably within the range of 3-6h.

According to a preferred embodiment of the present invention, the weight ratio of the carbon precursor to the activator used for activation is 1: (0.1-3), more preferably 1: (0.2-2), further preferably 1: (1-2), even more preferably 1: (1.5-2).

According to a preferred embodiment of the present invention, the activation temperature is within the range of 500-1,000°C, more preferably within the range of 600-900°C, further preferably within the range of 750-800°C; the activation time is within the range of 0.1-6h, more preferably within the range of 0.3-4h, further preferably within the range of 1-1.5h.

According to a preferred embodiment of the present invention, the activator comprises at least one selected from the group consisting of an alkali metal hydroxide, an alkaline earth metal hydroxide, an alkali metal salt compound and an alkaline earth metal salt compound, more preferably at least one selected from the group consisting of potassium hydroxide, potassium carbonate, potassium bicarbonate, sodium hydroxide and calcium hydroxide; further preferably at least one selected from the group consisting of potassium hydroxide, sodium hydroxide and potassium carbonate.

According to a preferred embodiment of the present invention, the activation is performed in an activation atmosphere in the presence of an inactive gas and an optional carbon-containing gas, preferably, the inactive gas comprises nitrogen gas and/or an inert gas; the volume concentration of the carbon-containing gas in the activation atmosphere is within the range of 0.1-20%, preferably within the range of 1-10% , further preferably within the range of 1-3%; more preferably, the carbon-containing gas in the activation atmosphere comprises C1-C3 hydrocarbon. The carbon-containing gas in the activation atmosphere may be one or more selected from the group consisting of methane, ethane, ethylene, acetylene, propane, natural gas, preferably methane. The inactive gas in the activation atmosphere can be nitrogen gas and/or an inert gas, preferably nitrogen gas; the inert gas can be one or more selected from the group consisting of helium, neon, argon, krypton and xenon. The present inventors has further discovered that activation in the presence of an inactive gas and a carbon-containing gas is more conducive to increasing the proportion of pore volume of micropores with a pore size smaller than 1nm in the pore volume of activated product, thereby obtaining more sodium storage sites.

According to a preferred embodiment of the present invention, the method for regulating and controlling the activator content in the activated product is washing, preferably, the washing includes acid washing and/or water washing, the washing may be generally performed by initially carrying out acid washing and then implementing water washing; preferably, initially performing water washing prior to the acid washing, wherein water washing refers to washing with water until the pH of the filtrate is neutral. Acid washing refers to washing with an inorganic acid solution, which may be one or more selected from the group consisting of hydrochloric acid, sulfuric acid, phosphoric acid, and nitric acid, preferably hydrochloric acid; the inorganic acid solution has a concentration within the range of 1-50wt%, preferably within the range of 3-30wt%, more preferably within the range of 3-10wt%. Acid washing is carried out at an operating temperature of 20-100°C, preferably 25-80°C, and the acid washing time is within the range of 30-700min, preferably within the range of 60-500min. Generally, the unreacted activator in the activated product can be substantially removed by using the washing mode, so that the content of the activator in the activated product is below 0.1wt%; such an operation can avoid the influence of the activator on the heat treatment effect.

According to a preferred embodiment of the present invention, the method for regulating and controlling the activator content in the activated product further includes drying the washed product. Drying can be performed under normal pressure condition or vacuum condition; the drying temperature may be within the range of 60-250°C, preferably 80-150°C; and the drying time is within the range of 4-48 hours, preferably within the range of 6-24 hours.

According to a preferred embodiment of the invention, the ratio (w) of the pore volume of pores with a pore size less than 1nm in the activated product after removing the activator relative to the total pore volume of the activated product after removing the activator is between 0.8 and 1, preferably between 0.9 and 1. The test method for the pore volume is the physical adsorption NLDFT method.

According to a preferred embodiment of the invention, the method further comprises pulverizing the dried product. The pulverization is performed by a physical pulverization method, which may be at least one of a mechanical pulverization method and a fluid energy pulverization method. The particle diameter D₅₀ of the dried product after pulverization may be within the range of 1-20µm, preferably within the range of 3-10µm.

The inventors of the present invention have further discovered that the proportion of slope capacity of the carbon material can be further improved by controlling the relationship between the activated product after removing the activator and the carbon material obtained from heat treatment to comply with the following conditions: the R₃ value of said carbon material is within the range of 0.3-0.8, preferably within the range of 0.6-0.7, more preferably within the range of 0.63-0.65; ${R}_{3} = \frac{{\left({I}_{D}/{I}_{G}\right)}_{carbon - material}}{{\left({I}_{D}/{I}_{G}\right)}_{A}}$ , wherein I_{D}/I_{G} is the peak area ratio of the D peak and the G peak in the Raman spectrum, and A is the activated product after removing the activator.

According to a preferred embodiment of the invention, the heat treatment temperature differs from the activation temperature by 0-300°C. Further preferably, the heat treatment temperature is 50-200°C higher than the activation temperature, preferably 100-150°C higher than the activation temperature. The adopted method can further improve the proportion of slope capacity ratio and the initial coulombic efficiency of the carbon material.

The inventors of the present invention have further discovered that using an aromatic hydrocarbon-rich substance for pretreating the activated product after removing activator can effectively increase the R₂ value, thereby improving the initial coulombic efficiency. The reason may be that the pretreatment can pre-carbonize the carbon surface to form "carbon cores", which facilitates the formation of carbon closed pores in the carbon-containing atmosphere. Therefore, according to a preferred embodiment of the present invention, the method further comprises: before the heat treatment, contacting the activated product having an activator content less than 0.5 wt% with an aromatic hydrocarbon-rich substance to perform pretreatment.

According to a preferred embodiment of the present invention, the pretreatment temperature is within the range of 300-700°C, more preferably within the range of 400-600°C, more preferably within the range of 450-500°C; and the pretreatment time is within the range of 0.5-3h, preferably within the range of 0.5-2h, more preferably within the range of 0.5-1.5h.

According to a preferred embodiment of the present invention, the weight ratio of the aromatic hydrocarbon-rich substance relative to the activated product having an activator content lower than 0.5wt% is 1:100-1:10, preferably 1:100-1:20, more preferably within the range from 1:90 to 1:70.

According to a preferred embodiment of the present invention, the pretreatment is carried out in the presence of an inert atmosphere, which comprises nitrogen gas and/or an inert gas. The inert gas may be one or more of helium, neon, argon, krypton and xenon.

According to a preferred embodiment of the invention, the aromatic hydrocarbon-rich substance has an aromatic hydrocarbon content within the range of 20-70wt%, preferably within the range of 30-60wt%, more preferably within the range of 40-55wt%. The aromatic hydrocarbons in the aromatic hydrocarbon-rich substance are typically benzene, naphthalene, anthracene, pyrene, and derivatives thereof. The aromatic hydrocarbon-rich substance may be derived from secondary products of petroleum refining, such as FCC slurry oil, reformate and ethylene tar, or derived from the products of the coal chemical industry, such as coal carbonization oil and coal-to-ethylene cracking tar, or derived from a mixture of aromatic hydrocarbon products and organic solvents in the chemical industry, such as a mixture of naphthalene and cyclohexane.

According to a preferred embodiment of the present invention, the carbon precursor may be various non-biomass carbon-containing materials, preferably petroleum coke. For example, the petroleum coke has a fixed carbon content greater than 83wt%, a volatile matter content no greater than 15wt%, and a sulfur content no greater than 10wt%. More preferably, the petroleum coke has a fixed carbon content within the range of 75-98wt%, preferably within the range of 80-90wt%, a volatile matter content within the range of 2-20wt%, preferably within the range of 5-15wt%, and a sulfur content within the range of 0.01-10wt%, preferably within the range of 0.1-8wt%. In the invention, petroleum coke refers to solid coke obtained from the coking process in the petroleum refining process. In the present invention, the volatile matter content in the petroleum coke is measured according to the Petroleum Industry Standard SH/T 0026 of China; the sulfur content is measured according to the Petroleum Industry Standard SH/T 0172 of China, "Determination of sulfur in petroleum products: resistance furnace - iodate titration method"; the fixed carbon content is tested by the following method: the water content of the petroleum coke is measured according to the Petroleum Industry Standard SH/T 0032 of China, and the ash content of the petroleum coke is measured according to the Petroleum Industry Standard SH/T 0029 of China standard, wherein the fixed carbon content (%) of the petroleum coke = 1 - water content - volatile matter content - ash content.

According to a preferred embodiment of the invention, the petroleum coke has a particle size within the range of 1-600µm, more preferably within the range of 5-100µm. The petroleum coke may be crushed before use. The crushing method may be any of the existing methods known in the art, such as at least one of a mechanical pulverizer, ball mill, and airflow milling, preferably one or both of airflow milling and mechanical pulverization. The petroleum coke may be crushed alone and then mixed with an activator for further crushing, or the petroleum coke and activator may be mixed and then crushed together. There is no specific requirement for the operation sequence.

According to a preferred embodiment of the invention, the degree of heat treatment is controlled such that the value of the heat treatment degree coefficient a is within the range of 0.05-0.3, preferably within the range of 0.1-0.2, more preferably within the range of 0.15-0.19, the carbon material with better reversible specific capacity, first coulombic efficiency, proportion of slope capacity, and rate capacity performance can be obtained. The heat treatment degree coefficient a = 100X/Se; wherein X is the carbon percentage increase, that is, the percentage increase of the mass of the carbon material after heat treatment relative to the carbon amount of the activated product after removing the activator; Se is the numerical value of the external specific surface area of the activated product after removing the activator as measured according to the physisorption t-plot method, and the Se value is within the range of 50-200 m²/g, preferably within the range of 80-150 m²/g, and Se is dimensionless in the formula.

According to a specific embodiment of the invention, the preparation method for carbon material comprises the following steps:
(1) Contacting a carbon precursor with an activator in the presence of an inactive gas and an optional carbon-containing gas to perform activation, then regulating and controlling the content of said activator in the activated product to lower than 0.5wt%;
(2) Contacting the activated product having an activator content less than 0.5 wt% with an aromatic hydrocarbon-rich substance in the presence of an inactive gas for performing pretreatment to obtain a pretreated product;
(3) Subjecting the pretreated product to heat treatment under a carbon-containing atmosphere condition.

By adopting the above method, petroleum coke with soft carbon properties is used as a precursor, and activation is performed on the petroleum coke to form a rich microporous channel structure with a pore size less than 1 nm, which is suitable for sodium storage; the heat treatment in a carbon-containing atmosphere can make the microporous channels form closed pores, thereby improving the initial coulombic efficiency, in addition, the high-rate capacity characteristics of the soft carbon are retained, the proportion of slope capacity and the reversible specific capacity of carbon materials are increased, thus the method is suitable for use in high-power sodium-ion batteries.

The third aspect of the present invention provides a carbon material prepared with the aforementioned method.

The fourth aspect of the present invention provides a use of the aforementioned carbon material and/or the carbon material prepared with the aforementioned method in negative electrode sheet; preferably the use as a negative electrode sheet in the sodium ion battery.

The fifth aspect of the present invention provides a sodium ion battery, the sodium ion battery comprises the aforementioned carbon material and/or the carbon material prepared with the aforementioned method.

The carbon material provided by the present invention has a high reversible specific capacity, a high initial coulombic efficiency, a high proportion of slope specific capacity, and a high capacity retention rate under large current. Using the carbon material provided by the present invention as the negative electrode sheet can significantly improve the energy density, cycle performance and charge-discharge rate of the battery, which is more conducive to achieving quick charging and rapid discharging of the battery.

The invention will be further described below with reference to examples.

The petroleum coke raw material used in the present invention was subjected to drying and dehydration, and was measured to have a fixed carbon content of 85.6 wt%, a volatile matter content of 10.1 wt%, and a sulfur content of 5.3 wt%. The petroleum coke was crushed to a particle size of 5-100µm for later use.

### Example 1

Petroleum coke and potassium hydroxide were mixed according to a mass ratio of 1:2, and heated in a methane/nitrogen gas atmosphere with a methane volume concentration of 3% at 800°C for 1 hour, after cooling to room temperature, the product was filtered and washed with water until the pH of a filtrate is neutral, the dilute hydrochloric acid with a concentration of 3wt% was then added into the filter cake and washed at a temperature of 25°C for 140 minutes. The product obtained after filtration and separation was further washed with water until the filtrate reached a neutral pH, the solid product was subjected to drying at 110°C for 12 hours, a product A1 was obtained. The product A1 was pulverized to a particle diameter D₅₀ of 5.3µm. FCC slurry oil with an aromatic hydrocarbon content of approximately 55wt% was mixed with the pulverized product A1 uniformly in a mass ratio of 1:90, and reacted at a temperature of 500°C under a nitrogen gas atmosphere for 1 hour. The programmed temperature rise was further implemented to a temperature of 900°C, and the reaction system was subjected to the vacuum treatment. When the vacuum degree dropped below 10⁻² kPa, a methane/nitrogen gas mixture with a methane volume concentration of 20% was then introduced and reacted for 6 hours, a carbon material B1 was prepared.

### Example 2

Petroleum coke and potassium hydroxide were mixed according to a mass ratio of 1:1.5, and heated in an ethane/nitrogen atmosphere with an ethane volume concentration of 2% at 750°C for 1 hour, after cooling to room temperature, the product was filtered and washed with water until the pH of a filtrate is neutral, the dilute hydrochloric acid with a concentration of 3wt% was then added into the filter cake and washed at a temperature of 25°C for 180 minutes. The product obtained after filtration and separation was further washed with water until the filtrate reached a neutral pH, the solid product was subjected to drying at 130°C for 12 hours, a product A2 was obtained. The product A2 was pulverized to a particle diameter D₅₀ of 5.5µm. FCC slurry oil with an aromatic hydrocarbon content of approximately 50 wt% was mixed with the pulverized product A2 uniformly in a mass ratio of 1:70, and reacted at a temperature of 480°C under a nitrogen gas atmosphere for 1.5 hours. The programmed temperature rise was further implemented to a temperature of 900°C, and the reaction system was subjected to the vacuum treatment. When the vacuum degree dropped below 10⁻² kPa, a methane/nitrogen gas mixture with a methane volume concentration of 15% was then introduced and reacted for 3 hours, a carbon material B2 was prepared.

### Example 3

Petroleum coke and potassium hydroxide were mixed according to a mass ratio of 1:2, and heated in a methane/nitrogen gas atmosphere with a methane volume concentration of 1% at 800°C for 1 hour, after cooling to room temperature, the product was filtered and washed with water until the pH of a filtrate is neutral, the dilute hydrochloric acid with a concentration of 3wt% was then added into the filter cake and washed at a temperature of 25°C for 150 minutes. The product obtained after filtration and separation was further washed with water until the filtrate reached a neutral pH, the solid product was subjected to drying at 110°C for 12 hours, a product A3 was obtained. The product A3 was pulverized to a particle diameter D₅₀ of 6.4µm. FCC slurry oil with an aromatic hydrocarbon content of approximately 40 wt% was mixed with the pulverized product A3 uniformly in a mass ratio of 1:80, and reacted at a temperature of 450°C under a nitrogen gas atmosphere for 0.5 hour. The programmed temperature rise was further implemented to a temperature of 950°C, and the reaction system was subjected to the vacuum treatment. When the vacuum degree dropped below 10⁻² kPa, a methane/nitrogen gas mixture with a methane volume concentration of 18% was then introduced and reacted for 4 hours, a carbon material B3 was prepared.

### Example 4

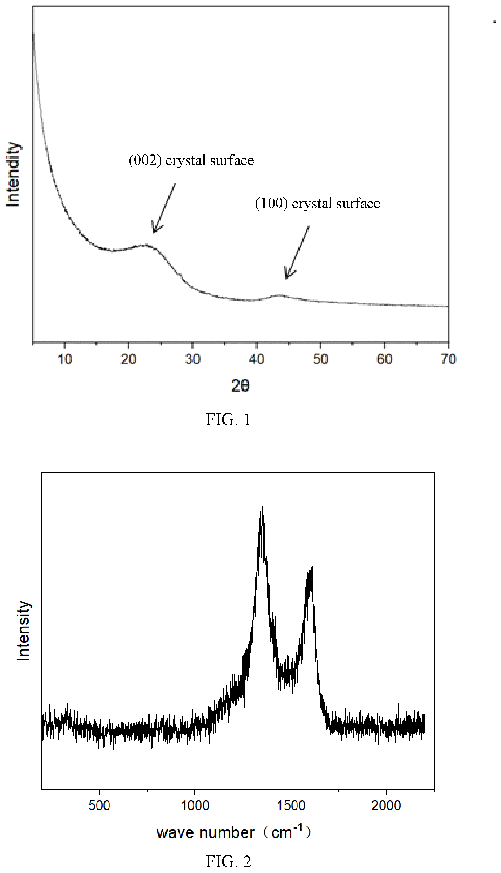

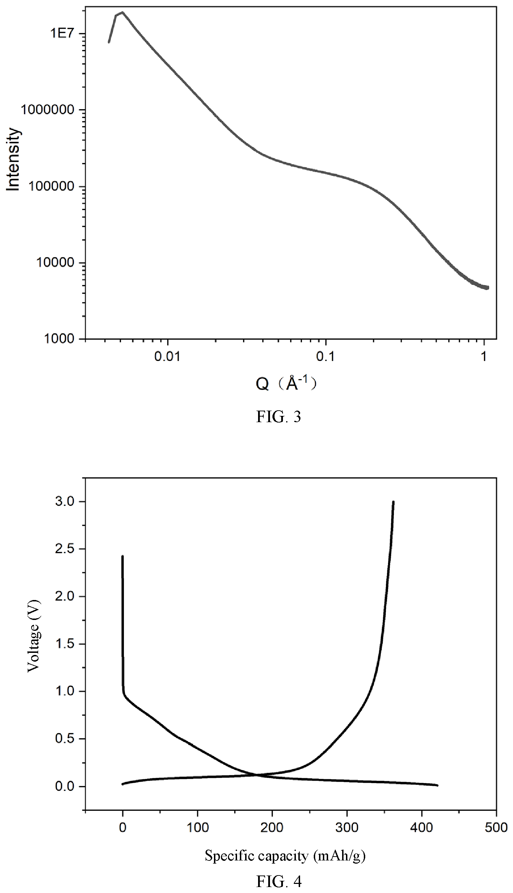

Petroleum coke and potassium hydroxide were mixed according to a mass ratio of 1:1, and heated in a nitrogen atmosphere at 750°C for 3 hours, after cooling to room temperature, the product was filtered and washed with water until the pH of a filtrate is neutral, the dilute hydrochloric acid with a concentration of 3wt% was then added into the filter cake and washed at a temperature of 25°C for 120 minutes. The product obtained after filtration and separation was further washed with water until the filtrate reached a neutral pH, the solid product was subjected to drying at 120°C for 5 hours, a product A4 was obtained. The product A4 was pulverized to a particle diameter D₅₀ of 5.6µm. The reformate with an aromatic hydrocarbon content of approximately 50 wt% was mixed with the pulverized product A4 uniformly in a mass ratio of 1:80, and reacted at a temperature of 520°C under a nitrogen gas atmosphere for 1 hour. The programmed temperature rise was further implemented to a temperature of 900°C, a methane/nitrogen gas mixture with a methane volume concentration of 20% was then introduced and reacted for 3 hours, a carbon material B4 was prepared. The XRD pattern, Raman spectrogram, small-angle scattering diffraction pattern, first-cycle constant current charge-discharge curve, and rate capacity performance graph of carbon material B4 were shown in FIG. 1, FIG. 2, FIG. 3, FIG. 4, and FIG. 5 respectively. FIG. 1 illustrated that the negative electrode material had obvious broad peaks at the (002) and (100) crystal planes, corresponding to the typical carbon structure of the negative electrode material; FIG. 2 showed the D peak and G peak near 1350 cm⁻¹ and 1580 cm⁻¹ corresponding to the carbon material; FIG. 3 showed that the negative electrode material had a rich pore and channel structure; FIG. 4 illustrated that the reversible specific capacity of the negative electrode material was 362mAh/g, the initial coulombic efficiency was 86%, and the proportion of slope capacity was 47.3%.

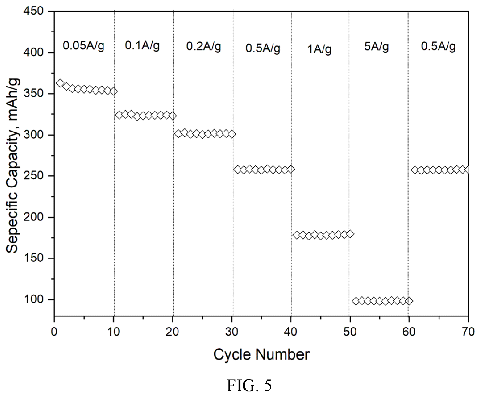

The rate capacity performance of the negative electrode material was tested on the Neware Cell Tester (CT/CTE-4000) at a test temperature of 25°C and a voltage range of 0.01-3V. The loop test was performed 10 times at current densities of 50mA/g, 100mA/g, 200mA/g, 500mA/g, 1A/g, 5A/g, and 500mA/g. FIG. 5 showed that the negative electrode material had excellent rate capacity performance, under a current density of 500mA/g, the specific capacity was still approximately 258mAh/g, the capacity retention rate was as high as 71%.

### Example 5

Petroleum coke and potassium hydroxide were mixed according to a mass ratio of 1:1, and heated in a nitrogen gas atmosphere at 900°C for 0.5 hour, after cooling to room temperature, the product was filtered and washed with water until the pH of a filtrate is neutral, the dilute hydrochloric acid with a concentration of 3wt% was then added into the filter cake and washed at a temperature of 40°C for 120 minutes. The product obtained after filtration and separation was further washed with water until the filtrate reached a neutral pH, the solid product was subjected to drying at 100°C for 12 hours, a product A5 was obtained. The product A5 was pulverized to a particle diameter D₅₀ of 7.5µm. Ethylene tar with an aromatic hydrocarbon content of approximately 60wt% was mixed with the pulverized product A5 uniformly in a mass ratio of 1:80, and reacted at a temperature of 530°C under a nitrogen gas atmosphere for 0.8 hour. The programmed temperature rise was further implemented to a temperature of 850°C, a methane/nitrogen gas mixture with a methane volume concentration of 20% was then introduced and reacted for 6 hours, a carbon material B5 was prepared.

### Example 6

Petroleum coke, potassium hydroxide and potassium carbonate were mixed according to a mass ratio of 1:1:1, and heated in a nitrogen gas atmosphere at 750°C for 1 hour, after cooling to room temperature, the product was filtered and washed with water until the pH of a filtrate is neutral, the dilute hydrochloric acid with a concentration of 3wt% was then added into the filter cake and washed at a temperature of 35°C for 150 minutes. The product obtained after filtration and separation was further washed with water until the filtrate reached a neutral pH, the solid product was subjected to drying at 150°C for 5 hours, a product A6 was obtained. The product A6 was pulverized to a particle diameter D₅₀ of 4.6µm. The reformate with an aromatic hydrocarbon content of approximately 30wt% was mixed with the pulverized product A6 uniformly in a mass ratio of 1:100, and reacted at a temperature of 550°C under a nitrogen gas atmosphere for 1 hour. The programmed temperature rise was further implemented to a temperature of 1,000°C, a methane/nitrogen gas mixture with a methane volume concentration of 30% was then introduced and reacted for 2 hours, a carbon material B6 was prepared.

### Example 7

Petroleum coke and potassium hydroxide were mixed according to a mass ratio of 1:1, and heated in a methane/nitrogen gas atmosphere with a methane volume concentration of 1% at 900°C for 0.5 hour, after cooling to room temperature, the product was filtered and washed with water until the pH of a filtrate is neutral, the dilute hydrochloric acid with a concentration of 4wt% was then added into the filter cake and washed at a temperature of 35°C for 150 minutes. The product obtained after filtration and separation was further washed with water until the filtrate reached a neutral pH, the solid product was subjected to drying at 150°C for 6 hours, a product A7 was obtained. The product A7 was pulverized to a particle diameter D₅₀ of 6.4µm. The pulverized product was subjected to the programmed temperature rise to a temperature of 900°C, and the reaction system was subjected to the vacuum treatment. When the vacuum degree dropped below 10⁻² kPa, a methane/nitrogen gas mixture with a methane volume concentration of 35% was then introduced and reacted for 2 hours, a carbon material B7 was prepared.

### Example 8

Petroleum coke and potassium hydroxide were mixed according to a mass ratio of 1:0.7, and heated in a nitrogen gas atmosphere at 800°C for 1 hour, after cooling to room temperature, the product was filtered and washed with water until the pH of a filtrate is neutral, the dilute hydrochloric acid with a concentration of 3wt% was then added into the filter cake and washed at a temperature of 30°C for 120 minutes. The product obtained after filtration and separation was further washed with water until the filtrate reached a neutral pH, the solid product was subjected to drying at 140°C for 10 hours, a product A8 was obtained. The product A8 was pulverized to a particle diameter D₅₀ of 7.3µm. The pulverized product was subjected to the programmed temperature rise to a temperature of 900°C, a methane/nitrogen gas mixture with a methane volume concentration of 35% was then introduced and reacted for 2 hours, a carbon material B8 was prepared.

### Example 9

Petroleum coke and potassium hydroxide were mixed according to a mass ratio of 1:0.5, and heated in a nitrogen gas atmosphere at 850°C for 2 hours, after cooling to room temperature, the product was filtered and washed with water until the pH of a filtrate is neutral, the dilute hydrochloric acid with a concentration of 3wt% was then added into the filter cake and washed at a temperature of 30°C for 120 minutes. The product obtained after filtration and separation was further washed with water until the filtrate reached a neutral pH, the solid product was subjected to drying at 120°C for 12 hours, a product A9 was obtained. The product A9 was pulverized to a particle diameter D₅₀ of 8.5µm. The pulverized product was subjected to the programmed temperature rise to a temperature of 900°C, a methane/nitrogen gas mixture with a methane volume concentration of 20% was then introduced and reacted for 2 hours, a carbon material B9 was prepared.

### Example 10

Petroleum coke and potassium carbonate were mixed according to a mass ratio of 1:3, and heated in a nitrogen gas atmosphere at 900°C for 2 hours, after cooling to room temperature, the product was filtered and washed with water until the pH of a filtrate is neutral, the dilute hydrochloric acid with a concentration of 4wt% was then added into the filter cake and washed at a temperature of 25°C for 180 minutes. The product obtained after filtration and separation was further washed with water until the filtrate reached a neutral pH, the solid product was subjected to drying at 110°C for 12 hours, a product A10 was obtained. The product A10 was pulverized to a particle diameter D₅₀ of 7.4µm. The pulverized product was subjected to the programmed temperature rise to a temperature of 900°C, a methane/nitrogen gas mixture with a methane volume concentration of 20% was then introduced and reacted for 3 hours, a carbon material B10 was prepared.

### Comparative Example 1

Petroleum coke and potassium hydroxide were mixed according to a mass ratio of 1:0.5, and heated in a nitrogen gas atmosphere at 850°C for 2 hours, after cooling to room temperature, the product was filtered and washed with water until the pH of a filtrate is neutral, the dilute hydrochloric acid with a concentration of 3wt% was then added into the filter cake and washed at a temperature of 30°C for 120 minutes. The product obtained after filtration and separation was further washed with water until the filtrate reached a neutral pH, the solid product was subjected to drying at 120°C for 12 hours, a product was obtained. The product was pulverized to a particle diameter D₅₀ of 8.5µm. The pulverized product was subjected to the programmed temperature rise to a temperature of 900°C, nitrogen gas was introduced and reacted for 2 hours, a carbon material C1 was prepared.

### Comparative Example 2

The wood-based activated carbon was used as the raw material, and pulverized to a particle diameter D₅₀ of 8.0µm, the pulverized raw material was subjected to the programmed temperature rise to a temperature of 900°C, a methane/nitrogen gas mixture with a methane volume concentration of 20% was then introduced and reacted for 3 hours, a carbon material C2 was prepared.

### Comparative Example 3

The wood-based activated carbon was used as the raw material, and pulverized to a particle diameter D₅₀ of 7.4µm, FCC slurry oil with an aromatic hydrocarbon content of approximately 55 wt% was mixed with the pulverized wood-based activated carbon uniformly in a mass ratio of 1:90, and reacted at a temperature of 500°C under a nitrogen gas atmosphere for 1 hour. The programmed temperature rise was further implemented to a temperature of 900°C, a methane/nitrogen gas mixture with a methane volume concentration of 20% was then introduced and reacted for 6 hours, a carbon material C3 was prepared.

### Comparative Example 4

Petroleum coke and potassium hydroxide were mixed according to a mass ratio of 1:0.5, and heated in an argon gas atmosphere at 850°C for 2 hours, after cooling to room temperature, the product was filtered and washed with water until the pH of a filtrate is neutral, the dilute hydrochloric acid with a concentration of 3wt% was then added into the filter cake and washed at a temperature of 30°C for 120 minutes. The product obtained after filtration and separation was further washed with water until the filtrate reached a neutral pH, the solid product was subjected to drying at 120°C for 12 hours, a product was obtained. The product was pulverized to a particle diameter D₅₀ of 8.5µm. The pulverized product was subjected to the programmed temperature rise to a temperature of 900°C, argon gas was then introduced and reacted for 2 hours, a carbon material C4 was prepared.

### Test Example 1

The product A obtained in the above example was tested in terms of the ratio of the pore volume of micropores with a particle size smaller than 1 nm relative to the total pore volume of the activated product (w), the numerical value of the external specific surface area as measured according to the physisorption t-plot method (Se), and the carbon percentage increase (X), and the heat treatment degree coefficient (a) of the carbon material B was calculated based on the parameters Se and X. The results were shown in Table 1.

**Table 1**

| | w | Sₑ | a | X (%) |
|---|---|---|---|---|
| Example 1 | 0.95 | 139 | 0.184 | 25.6 |
| Example 2 | 0.94 | 113 | 0.152 | 17.2 |
| Example 3 | 0.94 | 131 | 0.163 | 21.3 |
| Example 4 | 0.93 | 88 | 0.116 | 10.2 |
| Example 5 | 0.93 | 90 | 0.120 | 10.8 |
| Example 6 | 0.91 | 85 | 0.114 | 9.7 |
| Example 7 | 0.94 | 94 | 0.129 | 12.1 |
| Example 8 | 0.95 | 79 | 0.092 | 7.3 |
| Example 9 | 0.96 | 73 | 0.056 | 4.1 |
| Example 10 | 0.85 | 52 | 0.077 | 4 |

### Test Example 2

The properties of the carbon materials obtained in the aforementioned Examples and Comparative Examples were tested, the test results were shown in Table 2.

The XRD test was performed by using the D/max-2500 type X-ray diffractometer manufactured by Rigaku Company in Japan, with Cu Kα, Ni filter, tube voltage of 20-60kV, tube current of 10-300mA, scan rate of 12.5 (°)/min, and scan range of 10°-70°.

Small-angle X-ray scattering (SAXS) testing was performed by using a Malvern Panalytical X'Pert³ MRD high-resolution X-ray diffractometer, with a 30W (wavelength of 0.1542 nm) Cu X-ray source, and an X-ray spot size of 0.8mm×0.8mm. The sample-to-detector distance was 0.55m, the exposure time was 1,800s, and the corresponding scattering vector Q value was within the range of 0.01-1.1Å⁻¹.

The Raman spectrum was tested on the HR800 confocal microscopic laser Raman spectrometer produced by HORIBA JobinYvon Company in France, with an emission laser wavelength of 532nm, a power of 10mW, a spectral resolution of 0.65 cm⁻¹, a grating of 1,800 g/mm, and a Raman shift range of 0-2000 cm⁻¹.

The pore structure and specific surface area of the material were measured by using the low-temperature nitrogen physisorption method, the ASAP2460 type physical adsorption instrument manufactured by Micromeritics Corporation was used under the following test conditions: the sample was subjected to vacuum treatment at 200°C for 5 hours, and the test was performed at the liquid nitrogen temperature (-196°C). The adsorption-desorption isotherms were measured according to the static method, the specific surface area of the material was calculated using the BET (Brunauer-Emmett-Teller) equation, and the pore size distribution was calculated using the NLDFT method.

The tap density was measured by using the BT-312 tap density meter manufactured by Dandong Bettersize Instruments Ltd. A certain mass m of negative electrode material was weighed and placed in a graduated cylinder. The cylinder was vibrated at a frequency of 300 vibrations/min until the volume of the sample was no longer decreased, the volume V was then read, the tap density ρ (g/cm³) = m/V.

The particle diameter D₅₀ was measured by using the Fritsch laser particle size analyzer. After the analyzer was powered on, the sample was placed in the sample compartment, the testing was started. After the testing was completed, the numerical values of D50 (µm) were read.

**Table 2**

| | R₁ | R₂ | R₃ | d₀₀₂ (nm) | Lc (nm) | La (nm) | S_{BET} (m²/g) | S_{X} (m²/g) | ρ (g/cm³) | D₅₀ (µm) |
|---|---|---|---|---|---|---|---|---|---|---|
| Example 1 | 0.24 | 0.97 | 0.64 | 0.4 | 1.3 | 1.8 | 4 | 1996 | 0.7 | 6 |
| Example 2 | 0.24 | 0.96 | 0.63 | 0.39 | 1.3 | 1.9 | 4 | 1487 | 0.8 | 6 |
| Example 3 | 0.24 | 0.96 | 0.64 | 0.39 | 1.3 | 1.8 | 6 | 1894 | 0.73 | 7 |
| Example 4 | 0.22 | 0.94 | 0.61 | 0.38 | 1.5 | 2 | 5 | 1203 | 0.8 | 6 |
| Example 5 | 0.23 | 0.95 | 0.62 | 0.38 | 1.5 | 2 | 3 | 1252 | 0.8 | 8 |
| Example 6 | 0.22 | 0.94 | 0.61 | 0.39 | 1.6 | 2.1 | 5 | 1146 | 0.81 | 5 |
| Example 7 | 0.23 | 0.95 | 0.62 | 0.38 | 1.5 | 1.9 | 4 | 1295 | 0.8 | 7 |
| Example 8 | 0.21 | 0.93 | 0.6 | 0.38 | 1.8 | 2.6 | 8 | 885 | 0.88 | 8 |
| Example 9 | 0.2 | 0.93 | 0.59 | 0.38 | 1.9 | 2.4 | 7 | 689 | 0.89 | 9 |
| Example 10 | 0.19 | 0.92 | 0.58 | 0.37 | 1.7 | 2.2 | 9 | 523 | 0.9 | 8 |
| Comparative Example 1 | 0.17 | 0.32 | 0.57 | 0.39 | 1.8 | 2.3 | 701 | 697 | 0.73 | 8 |
| Comparative Example 2 | 0.17 | 0.81 | 0.51 | 0.38 | 2.4 | 3.1 | 18 | 834 | 0.78 | 7 |
| Comparative Example 3 | 0.18 | 0.84 | 0.45 | 0.38 | 2.5 | 3.2 | 13 | 834 | 0.79 | 7 |
| Comparative Example 4 | 0.17 | 0.31 | 0.58 | 0.39 | 1.8 | 2.2 | 698 | 695 | 0.72 | 8 |

| | | | | | | | | | | |
|---|---|---|---|---|---|---|---|---|---|---|
| Note: when R₃ of Comparative Examples 2-3 is calculated, the raw material is regarded as the product A. | | | | | | | | | | |

### Test Example 3

The electrochemical performance evaluation of the carbon materials prepared in the Examples and Comparative Examples was carried out by using the button cells, and the specific process was as follows:
(1) Preparation of electrode sheets: The prepared carbon material, conductive carbon black and polyvinylidene fluoride (PVDF) were uniformly dispersed in N-methylpyrrolidone (NMP) according to a mass ratio of 93:2:5, mixed uniformly and transferred to a copper foil, coated with a scraper, the sample was then placed in a drying oven of 100°C for drying, and then disposed in a vacuum drying oven for drying at 100°C, the sample was then taken out and cut into discs (i.e., electrode sheets) with a diameter of 12 mm using a slicer for later use, the coating amount was approximately 3 mg/cm².
(2) Battery assembly: Battery assembly was carried out in a glove box with oxygen and water contents less than 0.1 ppm. A negative electrode shell was taken, the prepared electrode sheet was placed therein, a sheet of glass fiber diaphragm was further added, 100µL of electrolyte was added, the electrolyte was a solution with a concentration of 1 mol/L and composed of sodium hexafluorophosphate (NaPF6)EC, DMC and EMC in a ratio of 1:1:1, a sodium sheet was further added, a gasket and a spring contact were placed in sequence, the positive electrode shell was covered, and finally sealed with a sealing machine, the assembly of the button cell was completed.
(3) Battery test: The battery test was carried out on the Neware Cell Tester (CT/CTE-4000) at a test temperature of 25°C and a voltage range of 0.01-3V. The reversible specific capacity of the negative electrode material was tested at a current density of 50mA/g, and the proportion of slope capacity and ICE were calculated. The loop test was performed 10 times at current densities of 50mA/g, 100mA/g, 200mA/g, 500mA/g, 1A/g, 5A/g, and 500mA/g. Capacity retention rate (%) at 500mA/g = (charge specific capacity at 500mA/g / first charge specific capacity at 50mA/g) * 100%. The test results were shown in Table 3.

**Table 3**

| | Reversible specific capacity (mAh/g) | Proportion of slope capacity (%) | ICE (%) | Capacity retention rate (%) at 500mA/g |
|---|---|---|---|---|
| Example 1 | 436 | 51.9 | 90 | 77 |
| Example 2 | 392 | 48.4 | 88 | 73 |
| Example 3 | 410 | 50.1 | 89 | 74 |
| Example 4 | 362 | 47.3 | 86 | 71 |
| Example 5 | 365 | 43.8 | 87 | 69 |
| Example 6 | 354 | 42.9 | 86 | 70 |
| Example 7 | 378 | 42.2 | 88 | 71 |
| Example 8 | 280 | 39.7 | 85 | 66 |
| Example 9 | 272 | 35.6 | 84 | 62 |
| Example 10 | 259 | 37.5 | 85 | 64 |
| Comparative Example 1 | 75 | 86.1 | 21 | 48 |
| Comparative Example 2 | 224 | 30.1 | 75 | 46 |
| Comparative Example 3 | 237 | 31.5 | 81 | 39 |
| Comparative Example 4 | 73 | 86.3 | 20 | 49 |

As shown in Table 3, when the carbon material of the present invention is used as a negative electrode material, it has a high reversible specific capacity, ICE and proportion of slope capacity, and a high rate capacity performance (i.e., it still has a high capacity retention rate under a large current), which facilitates fast charging and rapid discharging of the batteries.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A carbon material, is **characterized in that** the carbon material has a R₁ value within the range of 0.19-0.3, preferably within the range of 0.22-0.25; ${R}_{1} = \frac{{I}_{002}}{{I}_{002 , G}}$, wherein I₀₀₂ is the peak intensity of the (002) peak in the XRD pattern of the carbon material, I_{002,G} is the peak intensity of the (002) peak of internal standard graphite in the XRD pattern, and the weight ratio of the carbon material to the graphite during test is 1:10.

2. The carbon material according to claim 1, wherein the carbon material has a R₂ value within the range of 0.85-1, preferably within the range of 0.94-1; ${R}_{2} = \frac{{V}_{TD}}{{V}_{SAXS}}$, wherein V_{TD} is the internal pore volume of said carbon material measured based on the true density, V_{TD}=1/ρ_{TD}-1/2.26, wherein ρ_{TD} is the true density of said carbon material, the unit is g/cm³, V_{SAXS} is the pore volume of said carbon material measured according to the small-angle X-ray scattering results, the unit is cm³/g.

3. The carbon material according to claim 1 or 2, wherein the carbon material has a d₀₀₂ value within the range of 0.37-0.4nm, preferably within the range of 0.38-0.4nm; wherein d₀₀₂ is the (002) interplanar crystal spacing.

4. The carbon material according to any one of claims 1-3, wherein the carbon material has an Lc value within the range of 1-3nm, preferably within the range of 1-2nm; wherein Lc represents an average grain size of the (002) crystal plane.

5. The carbon material according to any one of claims 1-4, wherein the carbon material has a La value within the range of 1-4nm, preferably within the range of 1.5-3nm; wherein La represents an average grain size of the (100) crystal plane.

6. The carbon material according to any one of claims 1-5, wherein the physisorption specific surface area S_{BET} of the carbon material is not more than 30m²/g, preferably not more than 10m²/g, further preferably within the range of 0.1-9 m²/g;
and/or, the specific surface area Sₓ of the carbon material measured by small-angle X-ray scattering is within the range of 500-3,000 m²/g, preferably within the range of 1,000-2,000 m²/g.

7. The carbon material according to any one of claims 1-6, wherein the carbon material has a particle diameter D₅₀ within the range of 2-20µm, preferably within the range of 3-10µm.

8. A method for preparing the carbon material, is **characterized in that** the method comprises: contacting a carbon precursor with an activator for activation, then regulating and controlling the content of said activator in an activated product to lower than 0.5wt%, subsequently performing a heat treatment; wherein the heat treatment is performed under a carbon-containing atmosphere condition, and the carbon precursor is non-biomass carbon.

9. The method according to claim 8, wherein the carbon-containing atmosphere comprises a carbon-containing gas and an optional inactive gas, and the volume concentration of the carbon-containing gas in the carbon-containing atmosphere is within the range of 1-100%, preferably within the range of 5-50%; preferably, the carbon-containing gas comprises a hydrocarbon that is in a gaseous state under the heat treatment temperature; more preferably C1-C10 hydrocarbon.

10. The method according to claim 8 or 9, wherein the heat treatment conditions cause that the relationship between the carbon percentage increase X and the heat treatment degree coefficient a meet the following formula: a=100X/Se, wherein the a value is within the range of 0.05-0.3, preferably within the range of 0.1-0.2; Se is the numerical value of the external specific surface area of the activated product after removing the activator as measured according to the physisorption t-plot method, and the Se value is within the range of 50-200 m²/g, preferably within the range of 80-150 m²/g;
preferably, the heat treatment temperature is within the range of 800-1,300°C, more preferably within the range of 850-1,200°C, and the time is within the range of 0.1-10h, more preferably within the range of 1-6h.

11. The method according to any one of claims 8-10, wherein the activation conditions cause that the R₃ value is within the range of 0.3-0.8, preferably within the range of 0.6-0.7; ${R}_{3} = \frac{{\left({I}_{D}/{I}_{G}\right)}_{carbon - material}}{{\left({I}_{D}/{I}_{G}\right)}_{A}}$ , wherein I_{D}/I_{G} is the peak area ratio of the D peak and the G peak in the Raman spectrum, the carbon material refers to the product obtained from heat treatment, and A is the activated product after removing the activator;
preferably, the weight ratio of the carbon precursor to the activator used for activation is 1: (0.1-3), more preferably 1: (0.2-2); the activation temperature is within the range of 500-1,000°C, more preferably within the range of 600-900°C; the activation time is within the range of 0.1-6h, more preferably within the range of 0.3-4h; and/or the activator comprises at least one selected from the group consisting of an alkali metal hydroxide, an alkaline earth metal hydroxide, an alkali metal salt compound and an alkaline earth metal salt compound, more preferably at least one selected from the group consisting of potassium hydroxide, potassium carbonate, potassium bicarbonate, sodium hydroxide and calcium hydroxide;
and/or the activation is performed in an activation atmosphere in the presence of an inactive gas and an optional carbon-containing gas, preferably, the inactive gas comprises nitrogen gas and/or an inert gas; the volume concentration of the carbon-containing gas in the activation atmosphere is within the range of 0.1-20%, preferably within the range of 1-10%; more preferably, the carbon-containing gas in the activation atmosphere comprises C1-C3 hydrocarbon.

12. The method according to any one of claims 8-11, wherein the method for regulating and controlling the activator content in the activated product is washing, preferably, the washing includes acid washing and/or water washing, more preferably, the washing process includes: subjecting the activated product to water washing, acid washing and water washing in sequence.

13. The method according to any one of claims 8-12, wherein the method further comprises: before the heat treatment, contacting the activated product having an activator content less than 0.5 wt% with an aromatic hydrocarbon-rich substance to perform pretreatment;
preferably, the pretreatment is carried out in the presence of an inert atmosphere, which comprises nitrogen gas and/or an inert gas; the pretreatment temperature is within the range of 300-700°C, more preferably within the range of 400-600°C; the pretreatment time is within the range of 0.5-3h, more preferably within the range of 0.5-2h; the weight ratio of the aromatic hydrocarbon-rich substance relative to the activated product having an activator content lower than 0.5wt% is 1:100-1:10, more preferably 1:100-1:20.

14. The method according to any one of claims 8-13, wherein the carbon precursor is petroleum coke, wherein the petroleum coke has a fixed carbon content within the range of 75-98wt%, preferably within the range of 80-90wt%, a volatile matter content within the range of 2-20wt%, preferably within the range of 5-15wt%, and a sulfur content within the range of 0.01-10wt%, preferably within the range of 0.1-8wt%; preferably, the petroleum coke has a particle size within the range of 1-100µm.

15. A carbon material prepared with the method according to any one of claims 8-14.

16. Use of the carbon material according to any one of claims 1-7 and 15 in negative electrode sheet; preferably the use as a negative electrode sheet in the sodium ion battery.

17. A sodium ion battery, is **characterized in that** a negative electrode material of the sodium ion battery comprises the carbon material according to any one of claims 1-7 and 15.
